# EUROPEAN PATENT SPECIFICATION

(11) **EP 0 560 837 B1**
(45) Date of publication and mention of the grant of the patent: **15.05.1996**
(21) Application number: 92900196.4
(22) Date of filing: 05.12.1991
(51) Int. Cl.: C04B 18/02

(54) **LIGHTWEIGHT AGGREGATE**
Leichte Zuschlastoffe
AGREGAT LEGER

(30) Priority: 07.12.1990 GB 9026682
(43) Date of publication of application: 22.09.1993
(73) Proprietor: National Power PLC, London EC4V 4DP (GB)
(72) Inventor: WALKER, Bryan James, Mowbury Park, Bedford MK41 8BD (GB)
(74) Representative: Allard, Susan Joyce
(86) International application number: GB9102157
(87) International publication number: WO9210438

(56) References cited:
- DE-A- 1 803 381
- DE-A- 3 834 751
- DE-C- 3 631 221
- FR-A- 2 631 331
- CHEMICAL ABSTRACTS, vol. 106, no. 18, Columbus, Ohio, US; abstract no. 139224B,

## Description

The present invention relates to a lightweight aggregate in the form of pellets or granules and, in particular, to a lightweight aggregate in the form of pellets or granules for use in the building industry. The pellets of aggregate are suitable, for example, for making structural or non-structrual building blocks, for lightweight fill and as a filler for lightweight concrete, for example lightweight concrete screeds. This invention also importantly incorporates pulverised fuel ash, which is a waste product from coal-fired power stations.

It has previously been shown that the incorporation of expanded polystyrene beads in lightweight concrete, cement and plaster mixes can result in lightweight building materials.

JP-60176976 teaches the production of lightweight building material from mixtures of an inorganic binder, a lightweight aggregate such as polystyrene beads and reinforcing fibres.

GB-1118621A relates to cement or plaster mixes comprising cement or plaster, expanded polystyrene, filler and a suspending agent.

GB-2095227A teaches a method of making lightweight concrete comprising cement, expanded polystyrene, sand, water and a surfactant.

US-3764357A teaches the preparation of lightweight concrete and plaster by a method comprising several steps to ensure that the lightweight aggregate is uniformly mixed with the cementaceous material and other relatively heavy ingredients of the mixes.

GB-2100244A teaches the production of insulating building blocks comprising a cement, a filler and a lightweight material, for example polystyrene, comprising up to 25% of the volume of the block.

It is also known to produce a lightweight aggregate in the form of pellets from pulverised fuel ash and a relatively small proportion of lime or cement, calculated on the content of fuel ash.

It has never previously, however, been considered feasible to incorporate large quantities of expanded polystyrene beads in such pellets because it has been thought that the presence of polystyrene would interfere with the pelletising or granulating process by preventing compaction of the fuel ash/cement mixture and that the polystyrene would migrate towards the surface of the pellets during formation thereof, so that the pellets would consist of a core of solid material and a soft surface layer mainly of polystyrene beads.

It has now been found that a lightweight aggregate containing large quantities of expanded polystyrene beads can be successfully produced.

Accordingly the present invention provides a method for forming a lightweight aggregate comprising mixing together from 80% to 99% by weight of pulverised fuel ash, from 1% to 20% by weight of cement and an amount of expanded polystyrene beads having a particle size of less than 2.5 millimetres, such that the volume of polystyrene beads is from 15% to 80% of the total volume of the final mixture, to form a pelletisable mix, forming the mix into pellets having a diameter of less than 15 millimetres which include a plurality of expanded polystyrene beads and curing the pellets in a moist atmosphere at a temperture below the boiling point of any expanding agent within the polystyrene beads.

The preferred proportion of cement in the mixture is from 10% to 15% by weight, the preferred size of the polystyrene beads is less than 1 millimetre and the preferred diameter of the pellets is from 3 to 9 millimetres. The minimum quantity of 1% by weight of cement is required to hold the pellet together.

The pellets are preferably cured at a temperature which is not above 50°C and hardened sufficiently in 1 to 2 days, depending on the curing temperature.

The rate of curing of the pellets can be increased if pulverised fuel ash, which retains heat from the power station in which it is produced, is utilized in the process.

Fuel ash which is preferred for use in the preparation of the lightweight aggregate of the present invention is produced as waste from coal fired power stations which burn hard coal, for example coal fired power stations found in the United Kingdom. The form of fuel ash preferred is either as dry ash or a sticky mix comprising approximately 12 to 15% water. Where the fuel ash for use in preparing the aggregate is already moist, for example in the form of a sticky mix, additional water to form a pelletisable mix may not be required. Where the fuel ash is used is in the form of dry ash or does not contain sufficient water to form a pelletisable mix, additional water is required during the mixing of the solid batch components and polystyrene beads. The cement used in the process is preferably Portland cement. The pulverised fuel ash used in the process is preferably fly ash.

It is also possible to add an inert filler in an amount of 19% of less by weight of the material forming the pellets (other than the polystyrene). Such fillers should be very fine material, preferably of particle size of less than 20 micrometres. Examples of such inert fillers are furnace bottom ash, ground slag, sand or finely ground quarry waste, such as rock dust.

After curing, the pellets may be heated to temperatures above 250°C.

If desired, after curing and hardening, the pellets may be heated to remove the exposed polystyrene beads on the surface of the pellets. Those polystyrene beads completely enclosed within the pellets begin to melt at approximately 300°C. The hardened pellets are strong enough to withstand the internal forces produced by any further expansion of the polystyrene beads on such heating. Such "burnt out" pellets which have had the exposed polystyrene beads removed from the surface thereof have increased densities and may also have increased thermal properties.

It may be that "burnt out" pellets which have had the polystyrene beads removed from the surface thereof are more popular in the building industry than those pellets where the polystyrene beads remain.

A further embodiment of the present invention is a method of preparing a lightweight aggregate wherein up to 15% by weight of liquid of powdered fuel is used to replace the same amount of cement in the mixture. Pellets which have been prepared with the inclusion of liquid or powdered fuel are hardened by sintering at a temperature in the range of from 800°C to 1400°C. This heating further increases the porosity of the pellets by burning out the combustable (organic) components of the pellets. At these temperatures, the moisture in the polystyrene beads contained within the pellets vaporizes and forms voids, the silica within the pulverized fuel ash melts, vitrifies and on cooling forms a coating around the pellet. During the preparation of any embodiment of the present invention from 1 to 6% by weight of hydrated lime may be used to replace the same amount of cement in the mixture.

The pelletisable mix according to the present invention is preferably made by weighing out the desired quantities of fuel ash and cement, or fuel ash, liquid or powdered fuel and cement, measuring out the desired relative volume of polystyrene beads, wetting the surface of the beads and coating the wetted beads with a small amount of at least one of the weighed components prior to mixing the beads with the remainder of the weighed components. Wetting the beads encourages the pulverized fuel ash and/or other components of the mix to stick to the polystyrene beads and destroys the electrostatic properties of the beads. Only a proportion of the total water needed is required to wet the beads initially.

Pretreatment of the polystyrene beads with surfactants another surface treating agent or combinations of two or more thereof may be necessary to aid compatibility with the other ingredients of the pellets. The pellets are preferably formed on a pan pelletiser with a water spray, if additional water is required.

The pellets produced according to the present invention have a bulk dry density in the range of from 200 to 750 kilograms per cubic metre. Those pellets with a bulk dry density of 300 kilograms per cubic metre, or below, are suitable for use in preparing thermal building blocks and those pellets with a bulk dry density of 400 kilograms per cubic metre or above may be used to prepare "standard" building blocks.

The pellets produced according to any embodiment of the invention may be used for the manufacture of building blocks by adding them to a matrix and moulding them in the standard fashion. The preferred matrix mix is formed from cement, pulverized fly ash and water. Building blocks prepared with the pellets of the present invention have performances closely approaching those of aerated concrete blocks.

As used herein, the term "thermal building block" is intended to cover building blocks with a bulk dry density of 500 kilograms per cubic metre, or below and the term "standard building block" is intended to cover building blocks with a bulk dry density of 600 kilograms per cubic metre, or above.

The present invention is further described by reference to the following Examples;

### Example 1

A batch comprising 12.5% by weight of Portland cement and 87.5% by weight of fly ash was weighed out and the bulk volume of the batch assessed. For each 100 parts by volume of the batch 185 parts by volume of polystyrene beads of diameter less than 1 millimetre were measured out. The polystyrene beads were moistened with water and mixed with sufficient material taken randomly from the batch to produce a thin adherent coating on the beads. The remainder of the batch and a small amount of water was then added and mixing was continued to produce an intimate mixture of flyash, cement and polystyrene beads, the polystyrene beads comprising 65% by volume of the mixture.

The mixture was fed into a 1 metre pan pelletiser with a water spray. The angle of tilt of the pan, the pan speed and depth and the water spray were adjusted until the pellets leaving the pan were hard enough to withstand handling and the major proportion were in the size range 3 to 9 millimetres.

The pellets were passed to storage in a high moisture atmosphere and allowed to harden at ambient temperature for two days.

The hardened pellets had a bulk density of 450 to 550 kg/m³ and an average crushing strength in excess of 15ON/cm² as measured on a Schleuniger tablet test machine between filter paper linings to avoid point loading on the pellets.

A batch of the pellets was mixed with 20% weight of a 4:1 fly ash/cement mixture, sufficient water added to achieve workability and formed into standard 100 mm building blocks. The blocks had an average density of 640 kg/m³, a crushing strength of at least 2.8N/cm² and a thermal conductivity of 0.15 W/m.K. measured according to BSS 874. Part 2, Section 2.1 (1986).

### Example 2

Lightweight aggregates were prepared according to example 1 using waste pulverized fuel ash from different coal fired power station sources. The quantities of solid batch material and polystyrene beads were as follows;

A total of 500 ml of solid batch material and 1500 ml of polystyrene beads were used to prepare each aggregate.

The polystyrene beads comprised 75% by volume of the final mixture of each aggregate.

Table 1 shows the bulk densities of the aggregates prepared with the sources of pulverized fuel ash indicated.

**Table 1**

| PFA Source | Bulk Density of aggregate Kg/m³ |
|---|---|
| Eggborough | 255 |
| West Burton | 225 |
| Blyth | 235 |
| Drax | 300 |
| Reference Drax [constitute PFA only] | 900 |

The aggregates from Table 1 have bulk dry densities suitable for use in preparing thermal building blocks.

## Claims

1. A method of making a lightweight aggregate comprising mixing together from 80% to 99% by weight of pulverized fuel ash, from 1% to 20% by weight of cement and an amount of expanded polystyrene beads having a particle size of less than 2.5 millimetres, such that the volume of polystyrene beads is from 15% to 80% of the total volume of the final mixture, to form a pelletisable mix, forming the mix into pellets having a diameter less than 15 millimetres which include a plurality of expanded polystyrene beads and curing the pellets in a moist atmosphere at a temperature below the boiling point of any expanding agent within the polystyrene beads.

2. A method as claimed in claim 1 wherein the polystyrene beads have a particle size of less than 1 millimetre.

3. A method as claimed in claim 1 or claim 2 wherein the mix is formed into pellets having a diameter in the range of from 3 to 9 millimetres.

4. A method as claimed in any one of the preceding claims wherein prior to mixing with the solid components of the mix, the polystyrene beads are treated with a surfactant, another surface treating agent, or combinations of two or more thereof.

5. A method as claimed in any one of the preceding claims further including the addition of water to form the pelletisable mix.

6. A method as claimed in any one of the preceding claims wherein 19% or less by weight of the material forming the pellets (other than the polystyrene) is an inert filler.

7. A method as claimed in any one of the preceding claims wherein the pellets are formed using a pan pelletiser.

8. A method as claimed in any one of the preceding claims further including, after curing, heating the pellets to temperatures above 250°C.

9. A method as claimed in any one of the preceding claims wherein up to 15% by weight of liquid or powdered fuel is used to replace the same amount of part of the cement in the mixture.

10. A method as claimed in claim 9 further including sintering the pellets at a temperature in the range of from 800°C to 1400°C.

11. A method as claimed in any one of the preceding claims wherein from 1 to 6% by weight of hydrated lime is used to replace the same amount of part of the cement in the mixture.

12. A lightweight aggregate whenever prepared by a method as claimed in any one of claims 1 to 7.

13. A lightweight aggregate as claimed in claim 12 having a bulk dry density of from 200 to 750 kg/m³.

14. A lightweight aggregate as claimed in claim 12 preferably having a bulk dry density of 300 kg/m³ or below.

15. A building block whenever prepared from the lightweight aggregate as claimed in any one of claims 12 to 14.

16. A building block as claimed in claim 15 having a bulk density of 400 kg/m³ or above.

## Patentansprüche

1. Verfahren zur Herstellung eines leichten Zuschlagsstoffes, bei dem 80 bis 99 Gew.-% pulverisierter Brennstoffasche, 1 bis 20 Gew.-% Zement und eine solche Menge expandierten Polystyrolkügelchen mit einer Teilchengröße von weniger als 2,5 mm, daß das Volumen der Polystyrolkügelchen 15 bis 80% des Gesamtvolumens der Endmischung beträgt, zur Bildung einer pelletisierbaren Mischung gemischt werden, die Mischung zu Pellets mit einem Durchmesser von weniger als 50 mm geformt wird, die jeweils eine Anzahl von expandierten Polystyrolkügelchen enthalten, und die Pellets in einer feuchten Atmosphäre bei einer Temperatur unter dem Siedepunkt eines gegebenenfalls in den Polystyrolkügelchen enthaltenen Treibmittels ausgehärtet werden.

2. Verfahren nach Anspruch 1, bei dem die Polystyrolkügelchen eine Teilchengröße von weniger als 1 mm haben.

3. Verfahren nach Anspruch 1 oder 2, bei dem die Mischung zu Pellets mit einem Durchmesser im Bereich von 3 bis 5 mm geformt wird.

4. Verfahren nach einem der vorangehenden Ansprüche, bei dem die Polystyrolkügelchen vor dem Mischen mit den Feststoffkomponenten der Mischung mit einem oberflächenaktiven Mittel oder einem anderen Oberflächenbehandlungsmittel oder Kombinationen von zwei oder mehr dieser Mittel behandelt werden.

5. Verfahren nach einem der vorangehenden Ansprüche, bei dem bei der Bildung der pelletisierbaren Mischung zusätzlich Wasser zugeführt wird.

6. Verfahren nach einem der vorangehenden Ansprüche, bei dem 19 Gew.-% oder weniger des die Pellets bildenden Materials (mit Ausnahme des Polystyrols) ein inerter Füllstoff sind.

7. Verfahren nach einem der vorangehenden Ansprüche, bei dem die Pellets unter Verwendung eines Pfannenpelletisierers geformt werden.

8. Verfahren nach einem der vorangehenden Ansprüche, bei dem die Pellets nach dem Aushärten zusätzlich auf Temperaturen überhalb 250°C erhitzt werden.

9. Verfahren nach einem der vorangehenden Ansprüche, bei dem bis zu 15 Gew.-% eines flüssigen oder pulversisierten Brennstoffs zum Ersatz der gleichen Menge eines Teils des Zements in der Mischung verwendet werden.

10. Verfahren nach Anspruch 9, bei dem die Pellets bei einer Temperatur von 800 bis 1400°C gesintert werden.

11. Verfahren nach einem der vorangehenden Ansprüche bei dem 1 bis 6 Gew.-% gelöschter Kalk verwendet werden, um die gleiche Menge eines Teils des Zements in der Mischung zu ersetzen.

12. Leichter Zuschlagsstoff, der nach einem Verfahren gemäß einem der Ansprüche 1 bis 7 hergestellt ist.

13. Leichter Zuschlagsstoff nach Anspruch 12 mit einer Trockendichte von 200 bis 750 kg pro kg/m³.

14. Leichter Zuschlagsstoff nach Anspruch 12, der vorzugsweise eine trockene Schüttdichte von 300 kg/m³ oder weniger aufweist.

15. Baustein, der aus einem leichten Zuschlagsstoff nach einem der Ansprüche 12 bis 14 hergestellt ist.

16. Baustein nach Anspruch 15 mit einer Dichte von 400 kg/m³ oder mehr.

## Revendications

1. Procédé de fabrication d'un agrégat léger comprenant le mélange ensemble de 80 % à 99 % en poids de cendre de combustible pulvérisée, de 1 % à 20 % en poids de ciment et d'une quantité de perles de polystyrène expansé ayant une taille de particule inférieure à 2,5 mm, de telle sorte que le volume des perles de polystyrène constitue de 15 % à 80 % du volume total du mélange final, pour former un mélange pelletisable, la formation du mélange en pellets ayant un diamètre inférieur à 15 mm qui comprennent une pluralité de perles de polystyrène expansé et la cuisson des pellets dans une atmosphère humide à une température en dessous du point d'ébullition de tout agent d'expansion dans les perles de polystyrène.

2. Procédé suivant la revendication 1, dans lequel les perles de polystyrène ont une taille de particule inférieure à 1 mm.

3. Procédé suivant l'une ou l'autre des revendications 1 et 2, dans lequel le mélange est formé en pellets d'un diamètre dans la gamme de 3 à 9 mm.

4. Procédé suivant l'une quelconque des revendications précédentes, dans lequel avant le mélange avec les composants solides du mélange, les perles de polystyrène sont traitées avec un agent tensioactif, un autre agent de traitement de surface ou des combinaisons de deux ou plusieurs de ceux-ci.

5. Procédé suivant l'une quelconque des revendications précédentes, comprenant de plus l'addition d'eau pour former le mélange pelletisable.

6. Procédé suivant l'une quelconque des revendications précédentes, dans lequel 19 % en poids ou moins de la matière formant les pellets (autre que le polystyrène) sont constitués par une charge inerte.

7. Procédé suivant l'une quelconque des revendications précédentes, dans lequel les pellets sont formés en utilisant un dispositif de pelletisation à bac.

8. Procédé suivant l'une quelconque des revendications précédentes, comprenant de plus, après la cuisson, le chauffage des pellets à des températures au-dessus de 250°C.

9. Procédé suivant l'une quelconque des revendications précédentes, dans lequel on utilise jusqu'à 15 % en poids de combustible liquide ou pulvérulent pour remplacer la même quantité de partie du ciment dans le mélange.

10. Procédé suivant la revendication 9, comprenant de plus le frittage des pellets à une température dans l'intervalle de 800°C à 1400°C.

11. Procédé suivant l'une quelconque des revendications précédentes, dans lequel on utilise de 1 à 6 % en poids de chaux hydratée pour remplacer la même quantité de partie du ciment dans le mélange.

12. Agrégat léger lorsque préparé par un procédé suivant l'une quelconque des revendications 1 à 7.

13. Agrégat léger suivant la revendication 12, ayant une densité sèche apparente de 200 à 750 kg/m³.

14. Agrégat léger suivant la revendication 12, ayant avantageusement une densité sèche apparente de 300 kg/m³ ou moins.

15. Bloc de construction lorsque préparé à partir de l'agrégat léger suivant l'une quelconque des revendications 12 à 14.

16. Bloc de construction suivant la revendication 15, ayant une densité apparente de 400 kg/m³ ou plus.
